# FASCICULE DE BREVET EUROPEEN

(11) **EP 3 283 802 B1**
(45) Date de publication et mention de la délivrance du brevet: **10.07.2019**
(21) Numéro de dépôt: 16719299.6
(22) Date de dépôt: 14.04.2016
(51) Int. Cl.: F16L 1/235, F16L 1/16

(54) **DISPOSITIF DE CONTRÔLE DU REMPLISSAGE D'UNE CONDUITE EN COURS DE POSE DANS UNE ÉTENDUE D'EAU, ENSEMBLE ET PROCÉDÉ ASSOCIÉS**
VORRICHTUNG ZUR STEUERUNG DER BEFÜLLUNG EINES ROHRS WÄHREND DES VERLEGENS IN EINEM GEWÄSSER UND ZUGEHÖRIGE ANORDNUNG UND VERFAHREN
DEVICE FOR CONTROLLING THE FILLING OF A PIPE AS IT IS BEING LAID IN A STRETCH OF WATER, AND ASSOCIATED ASSEMBLY AND METHOD

(30) Priorité: 16.04.2015 FR 1553403
(43) Date de publication de la demande: 21.02.2018
(73) Titulaire: Technip France, 92400 Courbevoie (FR)
(72) Inventeur: ROUTEAU, Sylvain, 92210 Saint Cloud (FR); LACHAUD, Emilie, 94800 Villejuif (FR); FRIVILLE, Rémi, 41310 Prunay-Cassereau (FR); DE KERDANET, Tegwen, 78230 Le Pecq (FR)
(74) Mandataire: Lavoix
(86) Numéro de dépôt international: PCT/EP2016/058280
(87) Numéro de publication internationale: WO 2016/166248

(56) Documents cités:
- WO-A1-02/084160
- FR-A- 1 288 732
- FR-A- 1 289 421

## Description

La présente invention concerne un dispositif de contrôle du remplissage d'une conduite en cours de pose dans une étendue d'eau, selon le préambule de la revendication 1.

Un tel dispositif est destiné à être monté à l'extrémité inférieure d'une conduite de transport de fluide en cours de pose, afin de filtrer et/ou de traiter l'eau introduite dans la conduite de transport de fluide lors de sa pose.
La conduite de transport de fluide est par exemple une conduite rigide formée d'un assemblage de tronçons de conduite soudés successivement sur une barge de pose (méthodes de pose dites « J Lay » et « S Lay » en langue anglaise), ou déroulés à partir d'une barge de pose (méthode de pose dite « Reel Lay » en langue anglaise).

Pour diverses raisons, il peut être intéressant de poser la conduite partiellement remplie d'eau, notamment pour stabiliser la conduite sur le fond marin pendant l'opération de pose. Le remplissage d'eau est effectué via un orifice situé sur l'extrémité inférieure de la conduite posée sur le fond marin (pratique dite « free flooding » en langue anglaise). Dans ce cas, il est souvent requis de filtrer et/ou traiter l'eau qui inonde la conduite.

Un dispositif de contrôle du remplissage de la conduite du type précité, désigné par le terme anglais « Passive Flooding Unit » ou « PFU » est connu par exemple de WO 02/084160. Un tel dispositif est propre à inonder la conduite d'une manière passive, à filtrer l'eau introduite dans la conduite et à la traiter avec un fluide de traitement pour éviter notamment la corrosion. Les dispositifs précités comportent en général un réservoir de fluide de traitement, qui est d'un volume fini.

Un tel dispositif fonctionne correctement lorsque la barge de pose flotte sur une étendue d'eau peu agitée. Cependant, lorsque l'étendue d'eau est agitée, la conduite en cours de pose est soumise à des variations de hauteur dues aux mouvements locaux de l'étendue d'eau.

Lorsque l'extrémité supérieure de la conduite redescend, un volume d'eau supplémentaire est aspiré à travers le dispositif de contrôle par un effet de succion. Au contraire, lorsque la conduite remonte, le volume d'eau supplémentaire est refoulé en sens contraire à travers le dispositif de contrôle.

Ceci n'est pas souhaitable, dans la mesure où l'eau refoulée contient du fluide de traitement qui peut être onéreux ou/et dommageable pour l'environnement. De plus, ce phénomène d'aspiration et de refoulement arrive aussi lorsque la pose de la conduite est interrompue. La durée des phases d'interruption de pose n'étant pas prédictible, la quantité requise de fluide de traitement devient difficile à prédire. Elle n'est pas simplement proportionnelle au volume de la conduite.

Par ailleurs, compte tenu de la compressibilité de l'eau et des oscillations de la conduite de transport de fluide, des phénomènes de résonance peuvent apparaître. Ces phénomènes provoquent une aspiration très importante de liquide, suivie d'une éjection pouvant endommager le dispositif de contrôle, et notamment les pompes de l'équipement d'injection de fluide de traitement. Ce phénomène de résonance rend encore plus aléatoire l'évaluation du volume de fluide de traitement requis.

Un but de l'invention est de fournir un dispositif de contrôle du remplissage d'une conduite de transport de fluide en cours de pose dans une étendue d'eau qui permette la pose de la conduite en la remplissant partiellement avec de l'eau provenant de l'étendue d'eau, et qui fonctionne de manière fiable, même lorsque l'étendue d'eau est agitée.

A cet effet, l'invention a pour objet un dispositif selon la revendication 1.

Le dispositif selon l'invention peut comprendre l'une ou plusieurs des caractéristiques des revendications 2 à 11, prise(s) isolément ou suivant toute combinaison techniquement possible.

L'invention a également pour objet un ensemble de convoyage de fluide, selon la revendication 12.

L'ensemble selon l'invention peut comprendre l'une ou plusieurs des caractéristiques des revendication 13 ou 14, prise(s) isolément ou suivant toute combinaison techniquement possible.

L'invention a également pour objet un procédé de pose d'une conduite de transport de fluide dans une étendue d'eau selon la revendication 15.

L'invention sera mieux comprise à la lecture de la description qui va suivre, donnée uniquement à titre d'exemple, et faite en se référant aux dessins annexés, sur lesquels :
- la figure 1 est une vue schématique de côté, prise en coupe partielle, d'une installation de pose d'une conduite de transport de fluide, la conduite étant munie à son extrémité inférieure d'un dispositif selon l'invention de contrôle du remplissage de la conduite ;
- la figure 2 est une vue schématique de côté, en coupe partielle, du dispositif de contrôle du remplissage visible sur la figure 1 ;
- la figure 3 est une vue analogue à la figure 1, lors d'une descente de l'ensemble de surface posant la conduite de transport de fluide, sous l'effet des mouvements de l'étendue d'eau ;
- la figure 4 est une vue analogue à la figure 3, lors d'une montée de l'ensemble de surface posant la conduite de transport de fluide, sous l'effet des mouvements de l'étendue d'eau ;
- la figure 5 est une vue d'une variante de réservoir de compensation de volume de fluide pour le dispositif de contrôle du remplissage selon l'invention.

Dans tout ce qui suit, les termes « amont » et « aval » s'entendent généralement par rapport au sens normal de circulation d'un fluide pétrolier dans la conduite, de bas en haut dans l'étendue d'eau.

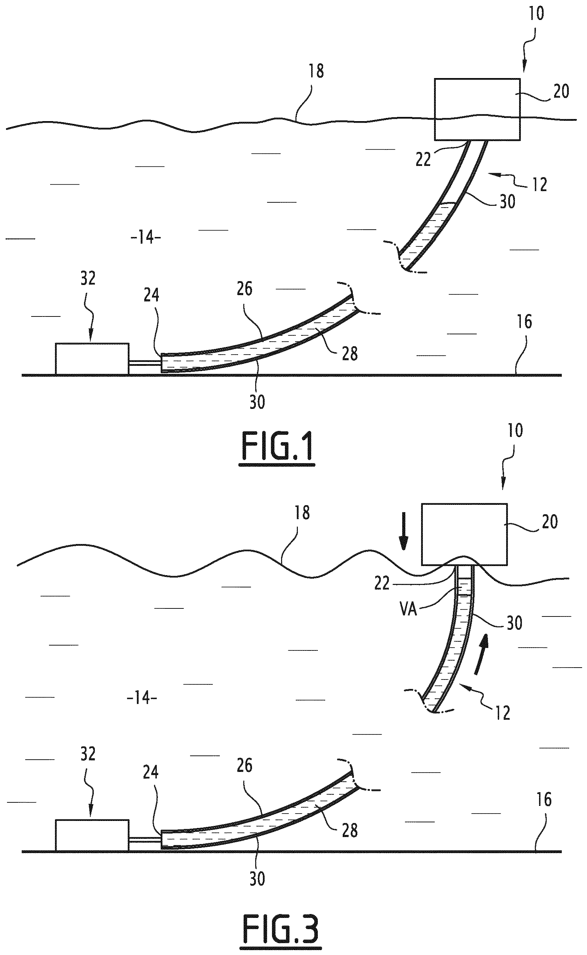

Une installation 10 de pose d'une conduite de transport de fluide 12 dans une étendue d'eau 14 est illustrée partiellement par la figure 1.

L'installation 10 est par exemple destinée à poser la conduite 12 entre un ensemble de fond (non représenté), propre à prélever des hydrocarbures au fond de l'étendue d'eau 14 et un ensemble de récupération à la surface 18 (non représenté).

L'étendue d'eau 14 est, par exemple, une mer, un lac ou un océan. La profondeur de l'étendue d'eau 14 au droit de l'installation 10 entre la surface 18 et le fond 16 est, par exemple, comprise entre 50 mètres et 3000 mètres. La présente invention pourrait aussi avantageusement être appliquée à des profondeurs supérieures à 3000m, car plus la profondeur est importante, plus les phénomènes d'aspiration et de refoulement à compenser peuvent être importants.

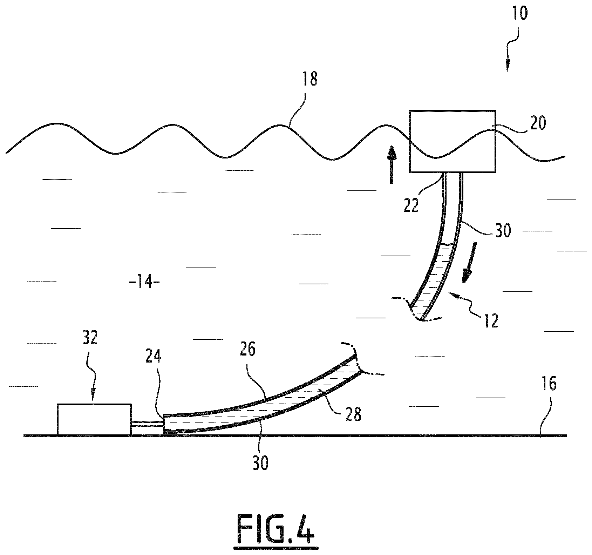

La surface 18 de l'étendue d'eau 14 est soumise localement à un mouvement oscillant faisant varier sa hauteur, tel que la houle, comme illustré par la figure 3 et par la figure 4.

L'installation 10 comporte au moins un ensemble de surface 20 flottant, destiné à la pose de la conduite de transport de fluide 12.

L'ensemble de surface 20 est par exemple une barge de pose. En variante, l'ensemble de surface 20 est une plateforme flottante.

L'ensemble de surface 20 est soumis à une variation de hauteur en fonction des mouvements de la surface 18, qui dépendent notamment de la houle.

La variation de hauteur de l'ensemble de surface 20 présente avantageusement une amplitude allant de 0 mètres à 5 mètres sur des périodes allant de 4 secondes à 18 secondes.

L'ensemble de surface 20 comporte des équipements de pose de la conduite de transport de fluide 12.

Les équipements de pose comprennent par exemple des tensionneurs et des unités de soudage. Dans ce cas, les équipements de pose sont aptes à assembler séquentiellement des tronçons de la conduite 12 pour la faire descendre progressivement dans l'étendue d'eau 14. En variante, les équipements de pose comportent un dérouleur, propre à dérouler progressivement une longueur croissante de la conduite 12 pour la descendre dans l'étendue d'eau 14.

La conduite de transport de fluide 12 est destinée à être immergée progressivement dans l'étendue d'eau 14 depuis l'ensemble de surface 20.

En référence à la figure 1, la conduite 12 s'étend entre une extrémité supérieure 22, disposée à la surface 18 ou au voisinage de celle-ci et une extrémité inférieure 24 qui est ici disposée au voisinage du fond 16 de l'étendue d'eau 14.

La conduite 14 comporte une paroi tubulaire 26 étanche définissant un passage intérieur 28 débouchant vers le bas, au niveau de l'extrémité inférieure 24 et vers le haut, au niveau de l'extrémité supérieure 22. La conduite 14 présente ici une section transversale circulaire.

La conduite 14 présente avantageusement un diamètre interne compris entre 75 millimètres et 1 mètre et une longueur comprise entre 500 mètres et 100 kilomètres. Elle s'étend en caténaire entre l'extrémité supérieure 22 et le fond 16.

La conduite 14 est avantageusement une conduite rigide métallique formée d'un assemblage de tronçons 30. En variante, la conduite 14 est une conduite flexible.

L'extrémité supérieure 22 est disposée au-dessus du niveau de la surface 18 de l'étendue d'eau 14 sur l'ensemble de surface 20, ou dans un volume gazeux situé sous la surface 18 de l'étendue d'eau 14.

Dans l'exemple représenté, l'extrémité inférieure 24 repose sur le fond 16 de l'étendue d'eau 14. En variante, l'extrémité inférieure 24 est disposée libre dans l'étendue d'eau 14.

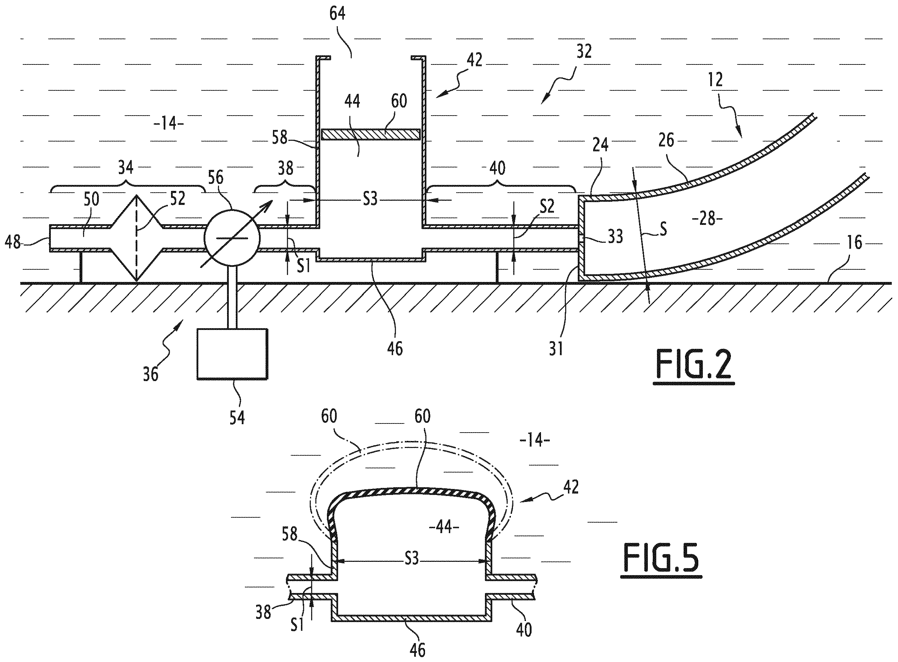

Comme visible sur la figure 2, l'extrémité inférieure 24 de la conduite de transport de fluide 12 est munie d'un élément de réduction de section 31 définissant un orifice 33 d'entrée d'eau dans la conduite de transport de fluide 12.

L'élément de réduction de section 31 est par exemple un bouchon percé monté dans le passage 28 à l'extrémité inférieure 24.

L'orifice 33 présente une section très inférieure à la section intérieure de la conduite de transport de fluide. Avantageusement, la section de l'orifice 33 est inférieure ou égale à 5 % de la section intérieure de la conduite de transport de fluide 12 dans le passage 28 à l'écart de l'organe 31. Préférentiellement, la section de l'orifice 33 est comprise entre 1% et 4% de la section intérieure de la conduite de transport de fluide 12 dans le passage 28 à l'écart de l'organe 31.

Dans le cas où l'orifice 33 présente une section circulaire, le diamètre de l'orifice 33 est par exemple respectivement égal à 10 mm, 20 mm, 40 mm et 200 mm pour une conduite de transport de fluide 12 présentant un diamètre interne respectivement égal à 75 mm, 150 mm, 400 mm et 1000 mm.

Lors de la pose de la conduite 12, le passage intérieur 28 est au moins partiellement inondé par de l'eau provenant de l'étendue d'eau 14.

La présence d'un organe de réduction de section 31, associé à un orifice 33 de faible taille, engendre une perte de charge qui limite le volume d'eau refoulé à l'extérieur de la conduite 12 lors de variations de hauteur de l'extrémité supérieure 22. Ceci est particulièrement le cas lorsqu'un phénomène de résonance se produit sur la colonne d'eau située à l'intérieur du passage 28.

La conduite de transport de fluide 12 est munie, à son extrémité inférieure 24, d'un dispositif 32 de contrôle de son remplissage et d'injection d'un fluide de traitement de l'eau.

En référence à la figure 2, le dispositif de contrôle 32 comporte un tronçon amont 34 d'introduction d'eau, un équipement 36 d'injection d'un fluide de traitement dans l'eau introduite par le tronçon amont 34, et un tronçon intermédiaire 38 de liaison.

Le dispositif de contrôle 32 comporte en outre un tronçon aval 40 de raccordement à la conduite 12, un réservoir de compensation de volume de liquide 42 définissant un volume variable 44 de réception de liquide, et un raccord 46, propre à raccorder le tronçon intermédiaire 38, le tronçon aval 40, et le réservoir de compensation de volume de liquide 42.

Les tronçons 34, 38, 40, l'équipement 36, le raccord 46 et le réservoir de compensation de volume 42 sont de préférence portés par un châssis commun (non représenté).

Le tronçon amont 34 définit une entrée 48 d'introduction d'eau. L'entrée d'introduction 48 débouche dans une lumière 50 de guidage d'eau s'étendant à travers le tronçon amont 34, le tronçon intermédiaire 38, le raccord 46 et le tronçon aval 40.

Le tronçon amont 34 est muni d'un filtre 52 interposé dans le passage 50 pour éliminer les éléments solides de taille macroscopique aspirés à travers l'entrée d'introduction 48.

Dans cet exemple, le tronçon amont 34 est raccordé au tronçon intermédiaire 38 à travers l'ensemble d'injection de fluide de traitement 36.

L'ensemble d'injection de fluide de traitement 36 comporte un réservoir de fluide de traitement 54 et au moins une pompe 56 propre à refouler du fluide de traitement provenant du réservoir de fluide de traitement 54 pour le mélanger avec l'eau introduite à travers le tronçon aval 34.

Dans l'exemple représenté sur la figure 2, le fluide de traitement contient par un agent anti corrosion. En variante ou en complément, le fluide de traitement contient un biocide.

La pompe 56 est ici une pompe passive. Elle est propre à être actionnée par le déplacement de l'eau introduite à travers le tronçon aval 34 et circulant vers la conduite de transport de fluide 12.

La circulation d'eau provoque par exemple le déplacement d'un piston de pompage de fluide de traitement suivant un mouvement de va-et-vient, afin de pomper du fluide de traitement dans le réservoir de fluide de traitement 54, et de l'éjecter en mélange avec de l'eau provenant du tronçon amont 34 dans le tronçon intermédiaire 38.

En variante, la pompe 56 est une pompe passive à effet venturi.

Selon une autre variante, la pompe 56 est une pompe active entraînée par un moteur électrique et/ou hydraulique, par exemple propulsé depuis la surface 18.

Le tronçon intermédiaire 38 est monté en sortie de l'équipement d'injection 36 pour recevoir le refoulement de la pompe 56. Il présente une section transversale interne S1, prise au niveau du raccord 46, inférieure à la section transversale interne S de la conduite 12, prise au niveau de l'extrémité inférieure 24.

Le tronçon aval 40 est rapporté sur le raccord 46, à l'opposé du tronçon intermédiaire 38. Il est de préférence formé d'un tube flexible.

La section transversale interne S2 du tronçon aval 40 est inférieure à la section transversale interne S de la conduite 12, prise au niveau de l'extrémité inférieure 24. La section transversale S2 est supérieure à la section transversale S1 de l'orifice d'entrée d'eau 33.

Le tronçon aval 40 est monté de manière étanche sur l'extrémité inférieure de la conduite 12, au niveau de l'élément de réduction de section 31, en entourant l'orifice d'entrée d'eau 33.

Le réservoir de compensation de volume de liquide 42 comporte un support 58 monté fixe sur le raccord 46 au moins un organe 60 de délimitation du volume de réception 44, mobile ou déformable par rapport au support 58.

Dans l'exemple représenté sur la figure 2, le support 58 est une chemise débouchant dans le raccord 46, et l'organe de délimitation 60 est un piston monté mobile dans la chemise.

Le volume intérieur 44 est délimité partiellement par le support 58 et est délimité partiellement par l'organe 60, qui l'obture de manière étanche. Il débouche dans le raccord 46 à travers une section transversale d'entrée S3 très supérieure à la section transversale S1 du tronçon intermédiaire 38.

La section transversale S3 est supérieure à 40 fois la section transversale S1, de préférence supérieure à 150 fois la section transversale S1.

Ainsi, du fait de la perte de charge très inférieure dans le réservoir de compensation de volume 42 par rapport au tronçon intermédiaire 38, lorsque de l'eau est refoulée par la conduite 12 vers le dispositif 32, la quasi-totalité de l'eau refoulée est propre à se diriger vers le volume de réception 44 du réservoir de compensation de volume 42, plutôt que vers le tronçon intermédiaire 38 menant à la pompe 56.

Par ailleurs, la section transversale S3 d'entrée du réservoir de compensation de volume 42 est supérieure ou égale à la section interne S de la conduite 12, prise au niveau de l'extrémité 24, à l'écart de l'élément de réduction de section 31.

Dans cet exemple, une face de l'organe de délimitation 60 opposée au volume de réception 44 est en contact avec l'étendue d'eau 14 à travers une ouverture 64 délimitée dans le support 58.

L'organe de délimitation 60 est cependant déplaçable sous l'effet d'une faible pression différentielle entre le volume de réception 44 et l'étendue d'eau 14.

De préférence, l'organe de délimitation 60 est propre à se déplacer lorsque la valeur absolue de la différence entre d'une part la pression dans volume de réception 44 et d'autre part la pression hydrostatique dans l'étendue d'eau 14 au contact avec l'organe de délimitation 60 est supérieure ou égale à 0,1 bar, avantageusement supérieure ou égale à 0,05 bar, préférentiellement supérieure ou égale à 0,01 bar.

Ceci permet le remplissage du volume de réception 44 du réservoir de compensation de volume 42 en offrant très peu de résistance à l'eau qui le remplit, provenant de la conduite 12. Par suite, la pression du liquide dans le volume de réception 44 du réservoir de compensation de volume 42 est quasiment égale à la pression hydrostatique dans l'étendue d'eau 14 au voisinage immédiat du dispositif 32 de contrôle de remplissage.

Tant que le volume de liquide présent dans le réservoir 42 est inférieur au volume maximal qu'il peut contenir, la différence de pression entre la pression hydrostatique à laquelle l'organe de délimitation 60 est soumis et la pression du liquide dans le volume de réception est inférieure à 0,1 bar, avantageusement inférieure ou égale à 0,05 bar préférentiellement inférieure ou égale à 0,01 bar.

Le volume maximal 44 accommodé par le réservoir de compensation de volume 42 est par exemple supérieur au produit de la section transversale interne S de la conduite 12, par l'amplitude de la variation de hauteur de l'ensemble de surface 20. Ainsi, par exemple, pour une conduite 12 de diamètre intérieur égal à 400 mm, installée par un ensemble de surface 20 soumis à des variations de hauteur de 3 m sous l'influence de la houle, le volume maximal 44 est de l'ordre de 400 litres.

Afin de pouvoir utiliser un même dispositif 32 de contrôle de remplissage pour différentes opérations de pose concernant des conduites de diamètres différents et des conditions de houle différentes, il est avantageux d'utiliser un réservoir de compensation de volume 42 présentant une grande capacité volumique. Ainsi, le volume maximal accommodé par le réservoir de compensation de volume 42 est avantageusement supérieur à 100 litres, préférentiellement supérieur à 300 litres, préférentiellement supérieur à 500 litres, préférentiellement supérieur à 700 litres, préférentiellement supérieur à 1000 litres.

Le raccord 46 est un raccord en T connectant le tronçon intermédiaire 38, le tronçon aval 40 et le réservoir de compensation de volume 42. De préférence, le volume de réception 44 débouche vers le bas dans le raccord 46, les tronçons 38 et 40 débouchant latéralement dans le raccord 46.

Un procédé de pose de la conduite 12 va maintenant être décrit.

Initialement, le dispositif de contrôle du remplissage 32 est monté à l'extrémité inférieure 24 d'un tronçon 30 de la conduite 12 destiné à être immergé, pour former un ensemble de convoyage de fluide.

Puis, des tronçons successifs 30 de la conduite 12 sont assemblés ou sont déroulés à partir de l'ensemble de surface 20 pour descendre et immerger une longueur croissante de la conduite 12 dans l'étendue d'eau 14, conjointement avec le dispositif 32.

Lors de la descente, de l'eau présente dans l'étendue d'eau 14 entre dans la lumière de guidage 50 du tronçon amont 34 à travers l'entrée d'introduction 48. L'eau est filtrée dans le filtre 52 pour éliminer les résidus solides significatifs.

L'eau passe ensuite dans la pompe 56, ce qui provoque le prélèvement de fluide de traitement provenant du réservoir 54 et son mélange avec l'eau convoyée dans le tronçon intermédiaire 38.

Dans sa configuration de remplissage, le volume interne 44 du réservoir de compensation de volume 42 est minimal. L'organe de délimitation 60 est situé au voisinage du raccord 46.

De l'eau contenant du fluide de traitement remonte alors dans le tronçon aval 40 et pénètre dans le passage intérieur 28 de la conduite de transport 12 à travers l'orifice d'entrée d'eau 33.

La conduite 12 se remplit donc progressivement d'eau contenant du fluide de traitement, ce qui évite sa corrosion interne et assure sa protection.

Comme illustré par la figure 3, lors d'un mouvement vers le bas de l'ensemble de surface 20 sous l'effet des mouvements de la surface 18 de l'étendue d'eau, l'extrémité supérieure 22 de la conduite 12 descend conjointement avec l'ensemble de surface 20. Un volume additionnel d'eau VA est aspiré à travers le dispositif 32 dans la conduite 12.

En référence à la figure 4, lorsque l'ensemble de surface 20 remonte, l'extrémité supérieure 22 de la conduite monte simultanément, entraînant un refoulement au moins partiel vers le bas du volume additionnel VA aspiré lors de la remontée.

L'eau refoulée vers le bas entre dans le dispositif 32 à travers l'orifice 33, le tronçon aval 40, jusqu'au raccord 46, engendrant une surpression locale dans le raccord 46. Toutefois, la section d'entrée S3 de l'accumulateur 42 étant très supérieure à la section transversale interne S1 du tronçon intermédiaire 38, la quasi-totalité de l'eau refoulée se dirige vers le volume de réception 44 plutôt que vers la pompe 56.

L'organe de délimitation 60 se déplace pour augmenter le volume de réception 44 et accommoder l'eau refoulée. Tant que le volume de réception 44 n'est pas rempli, la surpression locale dans le raccord 46 est limitée à la différence de pression nécessaire pour déplacer l'organe de délimitation 60, c'est-à-dire à une valeur très faible.

Ainsi, aucune détérioration de la pompe 56 ne se produit. Le risque de contamination de l'étendue d'eau 14 par de l'eau contenant du fluide de traitement est en outre quasi éliminé.

La présence de l'orifice d'entrée d'eau 33 présent sur l'organe de réduction de section 31 limite en outre la quantité d'eau refoulée, notamment en cas de résonance sur la colonne d'eau présente dans le passage intérieur 28 de la conduite 12.

La présence du dispositif de contrôle 32 assure donc un remplissage progressif au moins partiel de la conduite 12 par de l'eau présente dans l'étendue d'eau 14, et l'injection d'un fluide de traitement pour éviter la détérioration de la conduite 12.

La pose est ainsi facilitée et accélérée par la présence de l'eau introduite dans la conduite 12.

Même si les mouvements de la surface 18 de l'étendue d'eau 14 sont importants lors de la pose, par exemple de l'ordre de 3 m, la quantité d'eau contenue dans la conduite 12 et les mouvements de cette eau sont maîtrisés, notamment par la réception de l'eau refoulée dans le réservoir de compensation de volume 42, et son passage à travers l'orifice d'entrée 33.

Le dispositif de contrôle 32 garde néanmoins une structure simple, peu coûteuse, et qui fonctionne sans intervention extérieure.

Dans la variante illustrée par la figure 5, le réservoir de compensation de volume 42 comporte un organe 60 de délimitation du volume intérieur 44 qui est une membrane déformable montée sur le support 58.

À la différence du réservoir de compensation de volume 42 représenté sur la figure 2, l'organe 60 est propre à se déformer pour augmenter le volume de réception 44 et accommoder l'eau refoulée depuis la conduite 12.

Le fonctionnement du dispositif de contrôle 32 est par ailleurs analogue à celui décrit précédemment.

## Revendications

1. Dispositif (32) de contrôle du remplissage d'une conduite de transport de fluide (12) en cours de pose dans une étendue d'eau (14), comprenant :
- un tronçon amont (34) définissant une entrée d'introduction d'eau (48) ;
- un équipement d'injection (36) d'un fluide de traitement dans l'eau introduite dans le tronçon amont (34),
- un tronçon intermédiaire (38) monté en aval de l'équipement d'injection (36) pour recevoir l'eau contenant du fluide de traitement ;
- un tronçon aval (40) de convoyage d'eau vers la conduite de transport de fluide (12) en cours de pose ;
**caractérisé en ce qu'**il comporte :
- un réservoir de compensation de volume de liquide (42), présentant un volume variable de réception (44) d'eau refoulée depuis la conduite de transport de fluide (12),
- un raccord (46), sur lequel sont connectés le tronçon intermédiaire (38), le tronçon aval (40) et le réservoir de compensation de volume de liquide (42), la section transversale d'entrée (S3) du réservoir de compensation de volume de liquide (42), prise au niveau du raccord (46), étant supérieure à 40 fois la section transversale interne (S1) du tronçon intermédiaire (38), prise au niveau du raccord (46).

2. Dispositif (32) selon la revendication 1, dans lequel la section transversale d'entrée (S3) du réservoir de compensation de volume de liquide (42), prise au niveau du raccord (46), est supérieure à 150 fois la section transversale interne (S1) du tronçon intermédiaire (38), prise au niveau du raccord (46).

3. Dispositif (32) selon l'une quelconque des revendications précédentes, dans lequel le réservoir de compensation de volume de liquide (42) comporte un organe de délimitation (60) du volume de réception (44), déplaçable ou déformable pour modifier le volume de réception (44), l'organe de délimitation (60) étant notamment un piston ou une membrane, une face de l'organe de délimitation (60) opposée au volume de réception (44) étant soumise à la pression hydrostatique de l'étendue d'eau (14).

4. Dispositif (32) selon la revendication 3, dans lequel l'organe de délimitation (60) est propre à se déplacer ou à se déformer lorsque la valeur absolue de la différence entre d'une part la pression dans le volume de réception (44) et d'autre part la pression hydrostatique dans l'étendue d'eau (14) appliquée sur l'organe de délimitation (60) est supérieure ou égale à 0,1 bar, avantageusement supérieure ou égale à 0,05 bar, avantageusement supérieure ou égale à 0,01 bar.

5. Dispositif (32) selon l'une quelconque des revendications précédentes, dans lequel le volume de réception (44) maximal accommodé par le réservoir de compensation de volume de liquide (42) est supérieur à 100 litres.

6. Dispositif (32) selon l'une quelconque des revendications précédentes, dans lequel l'équipement d'injection (36) du fluide de traitement comporte une pompe (56) refoulant dans le tronçon intermédiaire (38).

7. Dispositif (32) selon la revendication 6, dans lequel la pompe (56) est une pompe passive, actionnable par l'eau introduite à travers le tronçon amont (34), ou est une pompe active comprenant au moins un moteur électrique ou hydraulique de pompage.

8. Dispositif (32) selon l'une quelconque des revendications précédentes, dans lequel l'équipement d'injection (36) du fluide de traitement comporte un réservoir de fluide de traitement (54), monté en amont de la pompe (56).

9. Dispositif (32) selon l'une quelconque des revendications précédentes, dans lequel le fluide de traitement contient un inhibiteur de corrosion et/ou un biocide.

10. Dispositif (32) selon l'une quelconque des revendications précédentes, comportant un filtre (52), interposé sur le tronçon amont (34), en amont de l'équipement d'injection (36) de fluide de traitement.

11. Dispositif (32) selon l'une quelconque des revendications précédentes, dans lequel le tronçon aval (40) est formé par un tuyau flexible.

12. Ensemble de convoyage de fluide, comportant :
- une conduite de transport de fluide (12), présentant une extrémité inférieure (24) située au voisinage du fond d'une étendue d'eau (14) et une extrémité supérieure (22) ;
- un dispositif (32) selon l'une quelconque des revendications précédentes, le tronçon aval (40) étant monté à l'extrémité inférieure (24) de la conduite de transport de fluide (12), le tronçon amont (34) débouchant dans l'étendue d'eau (14).

13. Ensemble selon la revendication 12, dans lequel l'extrémité inférieure (24) de la conduite de transport de fluide (12) est munie d'un élément de réduction de section (31) définissant un orifice (33) d'entrée d'eau dans la conduite de transport de fluide (12), l'orifice d'entrée d'eau (33) présentant un diamètre inférieur au diamètre de la conduite de transport de fluide (12), le tronçon aval (40) débouchant dans l'orifice d'entrée d'eau (33).

14. Ensemble selon la revendication 13, dans lequel la section transversale de l'orifice d'entrée d'eau (33) est inférieure à 5 % de la section transversale de la conduite de transport de fluide (12).

15. Procédé de pose d'une conduite de transport de fluide (12) dans une étendue d'eau (14) comprenant les étapes suivantes :
- descente d'un ensemble selon l'une quelconque des revendications 12 à 14 dans une étendue d'eau (14),
- remplissage progressif de la conduite de transport de fluide (12) par de l'eau de l'étendue d'eau, à travers le tronçon amont (34), le tronçon intermédiaire (38), le raccord (46) et le tronçon aval (40), et injection de fluide (12) de fluide de traitement par l'équipement d'injection (36) dans l'eau introduite dans la conduite de transport ;
- refoulement partiel d'eau depuis la conduite de transport de fluide (12) à travers le tronçon aval (40) ;
- remplissage du volume de réception (44) du réservoir de compensation de volume de liquide (42) par l'eau refoulée depuis la conduite de transport de fluide (12).

## Patentansprüche

1. Vorrichtung (32) zur Steuerung der Füllung einer Fluidtransportleitung (12) im Zuge des Verlegens in einem Gewässer (14), aufweisend:
- einen vorderen Abschnitt (34), der einen Wassereinbringungseinlass (48) definiert,
- eine Einrichtung zur Einspritzung (36) eines BehandlungsFluid in das Wasser, das in den vorderen Abschnitt (34) eingegeben wurde,
- einen Zwischenabschnitt (38), der hinter der Einrichtung zur Einspritzung (36) angebracht ist, zum Empfangen des Wassers, das das Behandlungsfluid enthält,
- einen hinteren Abschnitt (40) zur Förderung von Wasser zu der Fluidtransportleitung (12) hin im Rahmen des Verlegens, **dadurch gekennzeichnet, dass** sie aufweist:
- einen Behälter zum Ausgleich von Flüssigkeitsvolumen (42), der ein variables Volumen zur Aufnahme (44) von Wasser hat, das von der Fluidtransportleitung (12) aus zurückstaut,
- ein Verbindungsstück (46), an das der Zwischenabschnitt (38), der hintere Abschnitt (40) und der Behälter zum Ausgleich von Flüssigkeitsvolumen (42) angeschlossen sind, wobei der Eingangsquerschnitt (S3) des Behälters zum Ausgleich von Flüssigkeitsvolumen (42), genommen auf Höhe des Verbindungsstücks (46), größer ist als 40 Mal der Innenquerschnitt (S1) des Zwischenabschnitts (38), genommen auf Höhe des Verbindungsstücks (46).

2. Vorrichtung (32) gemäß Anspruch 1, wobei der Eingangsquerschnitt (S3) des Behälters zum Ausgleich von Flüssigkeitsvolumen (42), genommen auf Höhe des Zwischenstücks (46), größer ist als 150 Mal der Innenquerschnitt (S1) des Zwischenabschnitts (38), genommen auf Höhe des Verbindungsstücks (46).

3. Vorrichtung (32) gemäß irgendeinem der vorhergehenden Ansprüche, wobei der Behälter zum Ausgleich von Flüssigkeitsvolumen (42) aufweist ein Organ zur Begrenzung (60) des Aufnahmevolumens (44), das verlagerbar oder deformierbar ist zum Modifizieren des Aufnahmevolumens (44), wobei das Organ zur Beschränkung (60) insbesondere ein Kolben oder eine Membran ist, wobei eine Seite des Organs zur Begrenzung (60), die dem Aufnahmevolumen (44) entgegengesetzt ist, dem hydrostatischen Druck des Gewässers (14) unterworfen ist.

4. Vorrichtung (32) gemäß Anspruch 3, wobei das Organ zur Begrenzung (60) imstande ist, sich zu verlagern oder sich zu verformen, wenn der Absolut-Wert der Differenz zwischen einerseits dem Druck in dem Aufnahmevolumen (44) und andererseits dem hydrostatischen Druck in dem Gewässer (14), der auf das Organ zur Begrenzung (60) ausgeübt wird, größer oder gleich 0,1 bar ist, vorteilhafterweise größer oder 0,05 bar, vorteilhafterweise größer oder gleich 0,01 bar.

5. Vorrichtung (32) gemäß irgendeinem der vorhergehenden Ansprüche, wobei das maximale Aufnahmevolumen (44), das von dem Behälter zum Ausgleich von Flüssigkeitsvolumen (42) bereitgestellt wird, größer als 100 Liter ist.

6. Vorrichtung (32) gemäß irgendeinem der vorhergehenden Ansprüche, wobei die Einrichtung zur Einspritzung (36) des Behandlungsfluid eine Pumpe (56) aufweist, die in den Zwischenabschnitt (38) fördert.

7. Vorrichtung (32) gemäß Anspruch 6, wobei die Pumpe (56) eine passive Pumpe ist, die betreibbar ist mittels des Wassers, das durch den vorderen Abschnitt (34) hindurch eingebracht wird, oder eine aktive Pumpe ist, die wenigstens einen elektrischen oder hydraulischen Pumpmotor aufweist.

8. Vorrichtung (32) gemäß irgendeinem der vorhergehenden Ansprüche, wobei die Einrichtung zur Einspritzung (36) des Behandlungsfluid aufweist einen Behandlungsfluid-Behälter (54), der vor der Pumpe (56) angebracht ist.

9. Vorrichtung (32) gemäß irgendeinem der vorhergehenden Ansprüche, wobei das Behandlungsfluid ein Korrosionsschutzmittel und/oder ein Biozid enthält.

10. Vorrichtung (32) gemäß irgendeinem der vorhergehenden Ansprüche, aufweisend einen Filter (52), der an dem vorderen Abschnitt (34) angeordnet ist vor der Einrichtung zur Einspritzung (36) von Behandlungsfluid.

11. Vorrichtung (32) gemäß irgendeinem der vorhergehenden Ansprüche, wobei der hintere Abschnitt (40) von einem flexiblen Schlauch gebildet ist.

12. Einrichtung zum Fluidtransport, aufweisend:
- eine Fluidtransportleitung (12), die ein unteres Ende (24), das benachbart zum Boden eines Gewässers (14) angeordnet ist, und ein oberes Ende (22) hat,
- eine Vorrichtung (32) gemäß irgendeinem der vorhergehenden Ansprüche, wobei der hintere Abschnitt (40) am unteren Ende (24) der Fluidtransportleitung (12) angebracht ist, wobei der vordere Abschnitt (34) in dem Gewässer (14) ausmündet.

13. Einrichtung gemäß Anspruch 12, wobei das untere Ende (24) der Fluidtransportleitung (12) mit einem Durchmesserreduktionselement (31) versehen ist, das eine Wassereinlass-Öffnung (33) in die Fluidtransportleitung (12) definiert, wobei die Wassereinlass-Öffnung (33) einen Durchmesser hat, der kleiner ist als der Durchmesser der Fluidtransportleitung (12), wobei der hintere Abschnitt (40) in der Wassereinlass-Öffnung (33) ausmündet.

14. Einrichtung gemäß Anspruch 13, wobei der Querschnitt der Wassereinlass-Öffnung (33) kleiner als 5% des Querschnitts der Fluidtransportleitung ist.

15. Verfahren zum Verlegen einer Fluidtransportleitung (12) in einem Gewässer (14), aufweisend die folgenden Schritte:
- Ablassen einer Einrichtung gemäß irgendeinem der Ansprüche 12 bis 14 in einem Gewässer,
- progressives Füllen der Fluidtransportleitung (12) mittels des Wassers des Gewässers durch den vorderen Abschnitt (34), den Zwischenabschnitt (38), das Verbindungsstück (40) und den hinteren Abschnitt (40) hindurch, und Fluideinspritzen (12) von Behandlungsfluid mittels der Einrichtung zur Einspritzung (36) in das Wasser, das in die Transportleitung eingebracht wird,
- partielles Fördern von Wasser von der Fluidtransportleitung (12) aus durch den hinteren Abschnitt (40) hindurch,
- Füllen des Aufnahmevolumens (44) des Behälters zum Ausgleich von Flüssigkeitsvolumen (41) mittels Wassers, das von der Fluidtransportleitung (12) rückstaut.

## Claims

1. Device (32) for controlling the filling of a fluid transport pipe (12) being laid in a stretch of water (14), comprising:
- an upstream section (34) defining a water introduction inlet (48);
- an injection equipment (36) for injecting a process fluid into the water introduced into the upstream section (34);
- an intermediate section (38) mounted downstream of the injection equipment (36) for receiving the water containing process fluid;
- a downstream section (40) for conveying water to the fluid transport pipe (12) being laid;
**characterized in that** it comprises:
- a liquid volume compensation reservoir (42), having a variable receiving volume (44) of water discharged from the fluid transport pipe (12),
- a connector (46) to which the intermediate section (38), the downstream section (40) and the liquid volume compensation reservoir (42) are connected, the inlet cross-section (S3) of the compensation reservoir (46) being greater than 40 times the internal cross-section (S1) of the intermediate section (38) taken at the connector (46).

2. Device (32) according to claim 1, wherein the inlet cross-section (S3) of the liquid volume compensation reservoir (42), taken at the connector (46), is greater than 150 times the internal cross-section (S1) of the intermediate section (38), taken at the connector (46).

3. Device (32) according to any one of the preceding claims, wherein the liquid volume compensation reservoir comprises a member (60) for delimiting the receiving volume (44), able to be displaced or deformed to modify the receiving volume (44), the delimiting member (60) being, in particular, a piston or a diaphragm, a face of the delimiting member (60) opposite the receiving volume (44) being subjected to the hydrostatic pressure of the stretch of water (14).

4. Device (32) according to claim 3, wherein the delimiting member (60) is designed to be displaced or deformed when the absolute value of the difference between on the on hand, the pressure in the receiving volume (44), and on the other hand, the hydrostatic pressure in the stretch of water (14) applied to the delimiting member (60), is greater than or equal to 0.1 bar, advantageously greater than or equal to 0.05 bar, preferably greater than or equal to 0.01 bar.

5. Device (32) according to any one of the preceding claims, wherein the maximum receiving volume (44) accommodated by the liquid volume compensation reservoir (42) is greater than 100 liters.

6. Device (32) according to any one of the preceding claims, wherein the process fluid injection equipment (36) comprises a pump (56) discharging into the intermediate section (38).

7. Device (32) according to claim 6, wherein the pump (56) is a passive pump that may be actuated by the water introduced through the upstream section (34), or is an active pump comprising at least one electric or hydraulic pump motor.

8. Device (32) according to any one of the preceding claims, wherein the process fluid injection equipment (36) comprises a process fluid reservoir (54) mounted upstream of the pump (56).

9. Device (32) according to any one of the preceding claims, wherein the process fluid contains a corrosion inhibitor and/or a biocide.

10. Device (32) according to any one of the preceding claims, comprising a filter (52) inserted on the upstream section (34) upstream of the process fluid injection equipment (36).

11. Device (32) according to any one of the preceding claims, wherein the downstream section (40) is formed by a flexible pipe.

12. Fluid conveying assembly, comprising:
- a fluid transport line (12) having a lower end (24) located in the vicinity of the bottom of a stretch of water (14), and an upper end (22);
- a device (32) according to any one of the preceding claims, the downstream section (40) being mounted at the lower end (24) of the fluid transport pipe (12), the upstream section (34) opening into the stretch of water (14).

13. Assembly according to claim 12, wherein the lower end (24) of the fluid transport pipe (12) is provided with a section reducing element (31) defining a water inlet opening (33) in the fluid transport pipe (12), the water inlet opening (33) having a diameter smaller than the diameter of the fluid transport pipe (12), the downstream section (40) opening into the water inlet opening (33).

14. Assembly according to claim 13, wherein the cross-section of the water inlet opening (33) is less than 5% of the cross-section of the fluid transport pipe (12).

15. Method for laying a fluid transport pipe (12) in a stretch of water (14), comprising the following steps:
- lowering of an assembly according to any one of claims 12 to 14 in a stretch of water (14),
- progressive filling of the fluid transport pipe (12) with water from the stretch of water through the upstream section (34), the intermediate section (38), the connector (46) and the downstream section (40), and fluid (12) injection of the process fluid by the injection equipment (36) into the water introduced into the conveying line;
- partial discharge of water from the fluid transport pipe (12) through the downstream section (40);
- filling the receiving volume (44) of the liquid volume compensation reservoir (42) with the water discharged from the fluid conveying pipe (12).
